# EUROPÄISCHE PATENTANMELDUNG

(11) **EP 2 037 439 A1**
(43) Veröffentlichungstag der Anmeldung: **18.03.2009**
(21) Anmeldenummer: 07115802.6
(22) Anmeldetag: 06.09.2007
(51) Int. Cl.: G09G 3/32, G09G 3/20, G06F 1/26

(54) **Elektronische Schutzmaßnahmen für organische Displays in medizinischen Kleingeräten**

(71) Anmelder: F.HOFFMANN-LA ROCHE AG, 4070 Basel (CH); Roche Diagnostics GmbH, 68305 Mannheim (DE)
(72) Erfinder: Menke, Andreas, 68305 Mannheim (DE); Heck, Wolfgang, 68526 Ladenburg (DE)
(74) Vertreter: Hörschler, Wolfram Johannes

(57) **Zusammenfassung**

Es wird ein medizinisches Hilfsmittel (110) mit einer elektrischen Energieversorgung (130) und einer Anzeigeeinrichtung (122) zur optischen Darstellung einer Information vorgeschlagen. Die Anzeigeeinrichtung (122) umfasst ein Display (124) mit mindestens einem organischen lichtemittierenden Material und ist eingerichtet, um mittels der elektrischen Energieversorgung (130) mit elektrischer Energie versorgt zu werden. Die Anzeigeeinrichtung (122) umfasst weiterhin eine Ansteuervorrichtung (126) zur Ansteuerung des Displays (124) sowie einen Displaytreiber (140). Die Ansteuervorrichtung (126) ist eingerichtet ist, um das Display (124) in einem regulären Betriebsmodus zur Darstellung der Information anzusteuern. Die Ansteuervorrichtung (126) umfasst eine Schutzschaltung (186), welche eingerichtet ist, um ein von der elektrischen Energieversorgung (130) bereitgestelltes elektrisches Signal zu überwachen und um bei einer Abweichung des elektrischen Signals von einem Normbereich die Anzeigeeinrichtung (122) in einen Sicherheitszustand zu schalten.

## Beschreibung

### Gebiet der Erfindung

Die Erfindung betrifft ein medizinisches Hilfsmittel mit einer elektrischen Energieversorgung und einer Anzeigerichtung zur optischen Darstellung einer Information. Die Erfindung betrifft weiterhin ein Verfahren zur Ansteuerung einer Anzeigeeinrichtung. Derartige Anzeigeeinrichtungen, Verfahren und medizinische Hilfsmittel werden insbesondere im Bereich der medizinischen Diagnostik eingesetzt, beispielsweise in medizinischen Hilfsmitteln zur Bestimmung einer Blutglucosekonzentration, einer Laktatkonzentration oder für Koagulationsmessungen.

### Stand der Technik

Die Bestimmung von Blutglucosekonzentrationen sowie eine entsprechende Medikation ist für Diabetiker ein essenzieller Bestandteil des Tagesablaufs. Dabei muss die Blutglucosekonzentration schnell und einfach mehrmals am Tag (typischerweise zwei- bis siebenmal) bestimmt werden, um gegebenenfalls entsprechende medizinische Maßnahmen ergreifen zu können. In vielen Fällen erfolgt dabei eine Medikation mittels automatischer Systeme, insbesondere so genannter Insulinpumpen.

Um den Tagesablauf des Diabetikers nicht mehr als nötig einzuschränken, werden häufig entsprechende mobile Geräte eingesetzt, welche einfach zu transportieren und zu handhaben sein sollten, so dass eine Messung der Blutglucosekonzentration beispielsweise am Arbeitsplatz oder auch in der Freizeit problemlos erfolgen kann. Derzeit sind verschiedene mobile Geräte am Markt, welche teilweise nach unterschiedlichen Messmethoden und unter Verwendung unterschiedlicher Diagnoseverfahren funktionieren. Ein erstes Messverfahren beruht beispielsweise auf einer elektrochemischen Messmethode, wobei eine Blutprobe auf eine mit Enzymen und Mediatoren beschichtete Elektrode appliziert wird. Entsprechende Teststreifen für derartige elektrochemische Messverfahren sind beispielsweise in US 5,286,362 beschrieben. Andere bekannte Messmethoden verwenden optische Messverfahren, welche beispielsweise darauf beruhen, dass die zu detektierende Substanz mit bestimmten Nachweisreagenzien reagieren kann, wobei eine Farbänderung des Reaktionsgemischs eintritt. Systeme zum Nachweis derartiger Farbreaktionen, und somit zum Nachweis der entsprechenden Analyten, sind beispielsweise aus CA 2,050,677 bekannt.

Es hat sich gezeigt, dass aufgrund allgemeiner altersbedingter Zunahme von Erkrankungen Diabetes häufig bei älteren Menschen auftritt. Gerade bei älteren Menschen ist jedoch vielfach die Sehkraft, insbesondere unter schlechten Lichtverhältnissen, altersbedingt eingeschränkt. Zudem sind Augenschädigungen eine häufige Form der typischen Folgeschäden des Diabetes Mellitus. Daher benötigen insbesondere Diabetiker gut ablesbare Anzeigeelemente in den portablen, zur Selbstkontrolle verwendeten Messgeräten. Ähnliche Probleme treten auch bei anderen Arten von Erkrankungen auf, bei welchen tragbare Geräte im Rahmen eines Homecare-Konzeptes verwendet werden.

Die derzeit auf dem Markt befindlichen portablen medizinischen Systeme, insbesondere portable Glucose-Messgeräte, setzen jedoch typischerweise Flüssigkristallanzeigen (Liquid Crystal Displays, LCDs) als Anzeigeinstrumente für Glucose-Messwerte, Warnungen und Hinweise, Datum, Uhrzeit etc. ein. Dabei kommen sowohl segmentierte LCDs als auch so genannte Matrix-LCDs zum Einsatz. Aufgrund ihrer geringen Kosten und einer einfacheren Ansteuerung werden überwiegend segmentierte LCDs eingesetzt. Matrix-LCDs sind in wenigen Glucose-Messgeräten enthalten, wobei es sich bei diesen Geräten häufig um hochwertige Geräte mit umfangreichen Datenmanagementfunktionen handelt.

Flüssigkristallanzeigen weisen jedoch hinsichtlich ihrer Ablesbarkeit einige Nachteile auf. So sind Flüssigkristallanzeigen insbesondere nicht selbstleuchtend. Die Flüssigkristallelemente wirken vielmehr lediglich als "Schalter" zum Ein- und Ausschalten einer lokalen Transparenz. Die Bereitstellung des Lichts muss jedoch durch andere Mittel als die Flüssigkristallanzeige selbst erfolgen. Zum einen kann dies dadurch geschehen, dass Umgebungslicht an einer reflektierenden Fläche hinter der Flüssigkristallanzeige reflektiert und durch die Flüssigkristallanzeige transmittiert wird. In diesem Fall hängt jedoch die Ablesbarkeit der Flüssigkristallanzeige stark von der Beleuchtungsstärke des Umgebungslichts ab. In dunkler oder lichtschwacher Umgebung können Flüssigkristallanzeigen nur schlecht oder gar nicht abgelesen werden. Ein weiterer Nachteil der Verwendung von Flüssigkristallanzeigen ist, dass die Ablesbarkeit der Flüssigkristallanzeige stark vom Ablesewinkel (typischerweise definiert als der Winkel zwischen einer Normalen zum Anzeigenelement und der Blickrichtung eines Beobachters) abhängig ist. Dieser Effekt trifft sowohl mit als auch ohne zusätzliche Hintergrundbeleuchtung auf. Dadurch ist die Benutzungsfreiheit des Glucose-Messgeräts durch den Diabetiker stark eingeschränkt. Dies macht sich insofern besonders nachteilhaft bemerkbar, da viele Diabetiker das Glucose-Messgerät verwenden, indem sie es zur Messung und Bedienung auf eine Tischplatte legen. Hier können situationsbedingt Ablesewinkel auftreten, bei denen das Ablesen des Displays beeinträchtigt oder sogar unmöglich ist.

Neben Flüssigkristallanzeigen sind eine Reihe weiterer Displaytechnologien bekannt. So sind insbesondere Technologien bekannt, welche auf der Lichtemission durch organische Materialien beruhen. Insbesondere ist hier die Technologie der organischen Leuchtdioden (OLEDs) zu nennen, welche in verschiedenen technischen Modifikationen eingesetzt wird. Bei organischen Leuchtdioden werden dünne organische Schichten (eine oder mehrere organische Schichten mit einer Gesamtdicke von typischerweise zwischen 50 und 300 nm) zwischen zwei Elektroden eingebettet. Wird ein elektrischer Strom durch die organischen Schichten geleitet, so findet, ähnlich zu anorganischen Halbleitern, in den organischen Schichten eine Rekombination von "Elektronen" und "Löchern" (bzw. deren organischen Pendants) statt. Bei dieser Rekombination werden Photonen emittiert. Dieser Effekt wird als organische Elektrolumineszenz bezeichnet.

Üblicherweise werden organische Leuchtdioden als Dünnschichtsysteme auf einem transparenten Substrat, beispielsweise einem Glas- oder Kunststoffsubstrat aufgebaut. Dabei werden üblicherweise nacheinander Elektroden- und organische Schichten aufgebaut, bis der oben beschriebene "Sandwich-Aufbau" entsteht. Üblicherweise wird dabei als erste Elektrodenschicht (zum Beispiel Anodenschicht) eine transparente Elektrodenschicht verwendet, beispielsweise Indium-Zinn-Oxid. Als Gegenelektrode (üblicherweise Kathode) wird beispielsweise eine Metallschicht, zum Beispiel Kalzium oder Magnesium, verwendet. Anschließend wird der "Sandwich-Aufbau" entsprechend verkapselt, um den Aufbau gegen Einfluss von Luftfeuchtigkeit und Sauerstoff zu schützen. Neben diesem beschriebenen Standardaufbau sind auch andere Aufbauten bekannt, beispielsweise Aufbauten mit mehreren, aufeinander gestapelten OLEDs oder Aufbauten, bei welchen nicht durch das Glassubstrat emittiert wird, sondern durch eine transparente Metallelektrodenschicht. Weiterhin existieren verschiedene Technologien, welche sich bezüglich der eingesetzten organischen Materialien unterscheiden. So existieren Technologien, bei welchen die Materialien sich aus (in der Regel aufgedampften) monomolekularen Substanzen zusammensetzen. Andere Technologien verwenden als organische Materialien Polymere, welche in der Regel nasschemisch aufgebracht werden. Auch hybride Technologien sind dem Fachmann bekannt.

Organische Leuchtdioden werden mittlerweile in verschiedenen Bereichen der Technik eingesetzt. Ein Beispiel hierbei sind Mobiltelefone, Mischpulte im Audiobereich, Displays für digitale Kameras, sowie MP3-Player oder Multimediaplayer. Auch im Bereich der medizinischen Technik finden sich Anwendungsbeispiele. So beschreiben beispielsweise WO 2004/048881 A2 und US 2003/0035109 A1 Systeme, bei welchen organische Leuchtdioden als Lichtquellen eingesetzt werden. WO 2004/048881 A2 offenbart eine Messeinrichtung zur optischen Untersuchung eines diagnostischen Testelements mit einer Lichtquelle, einem Photodetektor und einer Vorrichtung zum Positionieren des Testelements. Die Lichtquelle weist eine oder mehrere organische Leuchtdioden auf. US 2003/0035109 A1 offenbart ein Gerät zur Detektion organischer Moleküle, insbesondere Biomoleküle oder Polymere, wobei zu Beleuchtungszwecken unter anderem auch der Einsatz einer OLED vorgeschlagen wird.

Neben dem Einsatz als Beleuchtungsmittel sind auch Anwendungen von OLEDs als Anzeigeelemente in der medizinischen Technik bekannt. So offenbart US 2005/0015115 A1 ein Erste-Hilfe-System, welches ein Ausgabegerät aufweist. Dabei wird darauf hingewiesen, dass das Ausgabegerät auch ein OLED-Display aufweisen kann. Auch US 6,579,237 B1 offenbart ein medizinisches System mit einem OLED-Display. Dabei handelt es sich um ein diagnostisches Ultraschall-Bildgebungssystem, welches ein OLED-Display zur Darstellung der Ultraschalldaten aufweist.

Eine Herausforderung bei der Verwendung von OLED-Displays, welche aus anderen Bereichen der Technik bekannt ist, besteht jedoch häufig darin, dass die eingesetzten Displays eine vergleichsweise geringe Lebensdauer aufweisen und zu hoher Störanfälligkeit neigen. Dies liegt insbesondere daran, dass die eingesetzten organischen Materialien und/oder die verwendeten Elektrodenmaterialien mit der Zeit degradieren. Weiterhin gestaltet sich die Qualitätskontrolle häufig schwierig, und beispielsweise die eingesetzten Elektrodenmaterialien (zum Beispiel reaktive Metalle wie Kalzium oder Magnesium) neigen zu Oxidationseffekten. Zudem sind OLED-Display extrem empfindlich gegenüber Überspannungen oder anders gelagerten fehlerhaften elektrischen Ansteuerungen.

Diese Effekte führen insgesamt dazu, dass einzelne Bildpunkte, einzelne Zeilen oder Spalten, sowie teilweise ganze Displays langsam oder auch unvorhergesehen plötzlich ausfallen. Ein derartiger Ausfall ist jedoch gerade bei medizinischen Geräten, insbesondere medizinischen Geräten, welche im privaten Bereich zur Selbstkontrolle und/oder Selbstmedikation eingesetzt werden, oft mit fatalen Folgen verbunden. So kann es sein, dass insbesondere ältere Patienten auftretende Fehler nicht wahrnehmen oder, selbst wenn die Fehler wahrgenommen werden, nicht sachgemäß auf diese Fehler reagieren. Dies kann beispielsweise zu einer fehlerhaften Medikation - mit den bekannten gravierenden Folgen - führen. Insbesondere haben sich hier so genannte segmentierte Displays, beispielsweise 7-Segment-Anzeigen, als nachteilig erwiesen, da hier durch unbemerkten Ausfall einzelner Segmente leicht eine Verfälschung von angezeigten Werten auftreten kann. So kann beispielsweise aus einer Anzeige "7" leicht die Anzeige "1" werden, wenn das oberste waagerechte Segment ausfällt. Ein derartiger Defekt kann bei Displays im medizinischen Bereich fatale Folgen mit sich bringen.

Eine besondere Rolle bezüglich der Steigerung der Lebensdauer und sonstiger vorteilhafter Displayeigenschaften kommt der Ansteuerung derartiger Displays zu. Aus dem Stand der Technik sind zahlreiche Ansteuerschaltungen für OLED-Displays bekannt, welche, je nach Art des Displays, das Display selbst vor Ausfällen schützen sollen. Ein Beispiel einer derartigen Ansteuerschaltung ist in US 7,193,589 B2 offenbart, wobei diese Druckschrift eine Ansteuerschaltung für Aktiv-Matrix-OLED-Displays zeigt. Zahlreiche weitere Beispiele sind bekannt.

In vielen Fällen umfasst die Ansteuerschaltung für OLED-Displays einen Displaytreiber, welcher in der Regel die Ströme durch die einzelnen Pixel (Bildpunkte) des Displays steuert, entsprechend den in diesen Displaytreiber eingespielten Bilddaten. Eine Problematik bei derartigen Ansteuerschaltungen, insbesondere im Bereich mobiler Geräte, besteht jedoch beim Ausschalten des Gerätes. So hat es sich gezeigt, dass bei einem abrupten Ausschalten oder in anderen Fällen, in denen der Ansteuerschaltung abrupt Energie entzogen wird, irreguläre Zustände auftreten können, in welchen ungeregelte Spannungs- und/oder Stromzustände auftreten können. Insbesondere ergibt sich diese Problematik bei mobilen Geräten, wenn, insbesondere im eingeschalteten Zustand, herausnehmbare Energiespeicher, wie beispielsweise Batterien oder Akkumulatoren, herausgenommen werden. Auch wenn das Gerät zu Boden fällt und dabei die Batterien oder Akkumulatoren aus dem Gerät herausfallen, bricht die Energieversorgung abrupt zusammen. In diesen Fällen eines abrupten Zusammenbruchs der elektrischen Energieversorgung kann üblicherweise der Programmablauf in der Ansteuerung des Displays nicht mehr das notwendige Timing garantieren, so dass es zu den beschriebenen ungeregelten Spannungszuständen kommen kann. Dies wiederum kann zur Zerstörung der Displays und/oder anderer Schaltungsteile der Geräte führen.

### Aufgabe der Erfindung

Aufgabe der vorliegenden Erfindung ist es somit, ein medizinisches Hilfsmittel zur Durchführung mindestens einer medizinischen Funktion bereitzustellen, welches die Nachteile bekannter medizinischer Hilfsmittel vermeidet. Insbesondere soll das medizinische Hilfsmittel einen wirksamen Schutz des bzw. der darin enthaltenen Displays vor ungeregelten Spannungszuständen bei einem Zusammenbruch der Energieversorgung beinhalten.

### Beschreibung der Erfindung

Diese Aufgabe wird gelöst durch ein medizinisches Hilfsmittel und ein Verfahren mit den Merkmalen der unabhängigen Ansprüche. Vorteilhafte Weiterbildungen der Erfindung, welche jeweils einzeln oder in Kombination realisiert werden können, sind in den abhängigen Ansprüchen dargestellt. Sämtliche Ansprüche werden hiermit durch Bezugnahme zum Inhalt der Beschreibung gemacht.

Es wird erfindungsgemäß ein medizinisches Hilfsmittel mit einer elektrischen Energieversorgung und einer Anzeigeeinrichtung zur optischen Darstellung einer Information vorgeschlagen. Die Anzeigeeinrichtung in einer der im Folgenden beschriebenen Ausführungsformen kann dabei grundsätzlich jedoch auch alleine, d.h. unabhängig von dem medizinischen Hilfsmittel, eingesetzt werden, beispielsweise in anderen Arten von Geräten mit einer elektrischen Energieversorgung, insbesondere in tragbaren Geräten.

Unter einem medizinischen Hilfsmittel kann dabei grundsätzlich jedes medizinische Gerät verstanden werden, welches mindestens eine medizinische Funktion ausübt. Dabei ist unter einer medizinischen Funktion eine Funktion zu verstehen, welche in irgendeiner Weise therapeutischen und/oder diagnostischen und/oder chirurgischen Zwecken dient. Insbesondere können dies diagnostische Funktionen sein in Form von Funktionen, bei welchen qualitativ und/oder quantitativ die Konzentration mindestens eines Analyten, insbesondere mindestens eines Metaboliten, in einer Körperflüssigkeit (beispielsweise in Blut und/oder in Gewebeflüssigkeit) bestimmt wird. Als Beispiele sind hier Blutglucosemessungen, Cholesterinmessungen, Koagulationsmessungen, die Bestimmung von Hormonspiegeln oder ähnliche Funktionen zu nennen. So kann das medizinische Hilfsmittel beispielsweise ein Blutglucosemeter, insbesondere ein tragbares Blutglucosemeter, umfassen. Alternativ oder zusätzlich können auch Messfunktionen von Körperfunktionen umfasst sein, beispielsweise Blutdruckmessungen. Alternativ oder zusätzlich können die medizinischen Funktionen jedoch auch beispielsweise Medikationsfunktionen umfassen, beispielsweise die Funktion einer Injektion einer bestimmten Menge an Insulin. Insofern kann das medizinische Hilfsmittel beispielsweise einen tragbaren, automatischen Insulininjektor und/oder eine Insulinpumpe umfassen. Weiterhin kann die medizinische Funktion beispielsweise eine Probennahmefunktion umfassen, beispielsweise eine Funktion zur Erzeugung einer flüssigen Probe einer Körperflüssigkeit, beispielsweise eines Blutstropfens, beispielsweise mittels mindestens einer Lanzette. Die oben genannten Funktionen können dabei einzeln oder auch in beliebiger Kombination in dem medizinischen Hilfsmittel implementiert sein. In jedem Fall ist es dabei bevorzugt, wenn das medizinische Hilfsmittel aufgrund seines Gewichts und/oder seiner Dimensionen als tragbares medizinisches Hilfsmittel ausgestaltet ist.

Alle genannten Beispiele medizinischer Hilfsmittel können mit der Notwendigkeit verbunden sein, mindestens eine optische Information für einen Benutzer grafisch darzustellen. Im Falle eines tragbaren Analysegerätes, beispielsweise eines Blutglucosemeters, kann es sich dabei beispielsweise um Analyseergebnisse und/oder um Menüfunktionen einer Funktionssteuerung des medizinischen Hilfsmittels handeln. Im Falle einer Medikationsvorrichtung kann es sich beispielsweise um eine eingestellte Medikationsmenge und/oder um Menüfunktionen einer Funktionssteuerung des medizinischen Hilfsmittels handeln. Im Falle einer Probennahmevorrichtung kann es sich beispielsweise um eine Information über eine Anzahl noch verfügbarer Lanzetten und/oder eine Einstechtiefe und/oder um Menüfunktionen einer Funktionssteuerung des medizinischen Hilfsmittels handeln. Das medizinische Hilfsmittel kann insbesondere im Rahmen eines Homecare-Programmes zur Überwachung von Gesundheitswerten zu Hause eingesetzt werden und kann beispielsweise für punktuelle, diskrete Messungen (zum Beispiel zu fest vorgegebenen Zeiten) eingesetzt werden oder kann eine kontinuierliche Überwachung umfassen.

Unter einer "Anzeigeeinrichtung" ist dabei eine beliebige Einrichtung zu verstehen, welche ausgestaltet ist, um einem Benutzer auf optischem Wege Informationen zur Verfügung zu stellen. Die im Folgenden beschriebene Anzeigeeinrichtung wird zwar konkret im Zusammenhang mit der Verwendung in einem medizinischen Hilfsmittel beschrieben. Dennoch ist die Anzeigeeinrichtung, welche von einer elektrischen Energieversorgung mit elektrischer Energie versorgbar ist, jedoch in einer oder mehrerer der im Folgenden dargestellten Ausführungsformen grundsätzlich auch im Rahmen anderer elektronischer Geräte, vorzugsweise tragbarer elektronischer Geräte verwendbar. So wäre es beispielsweise denkbar, die Anzeigeeinrichtung in einer der dargestellten Ausführungsformen beispielsweise im Rahmen eines mobilen Kommunikationsgerätes, beispielsweise eines Mobiltelefons oder eines PDAs (personal digital assistant, tragbarer Kleincomputer) einzusetzen. Auch andere Arten elektronischer Geräte, insbesondere tragbarer elektronischer Geräte, sind vorteilhaft mit der beschriebenen Anzeigeeinrichtung ausrüstbar und profitieren von den im Folgenden beschriebenen Vorteilen.

Die Anzeigeeinrichtung umfasst zum Zweck der Bereitstellung optischer Informationen mindestens ein Display mit mindestens einem organischen lichtemittierenden Material. Bei diesem Display kann es sich um eine beliebige Vorrichtung zur Darstellung optischer Informationen handeln, beispielsweise einfache Leuchtpunkte, Symbole, Segmentanzeigen (zum Beispiel 7-Segment-Anzeigen), Matrixdisplays oder andere Arten von Displays. Auch als einfache Hintergrundbeleuchtung für ein anders gestaltetes Display kann das organische lichtemittierende Material verwendet werden, beispielsweise indem das Display ein Flüssigkristall-Display mit einer organischen Hintergrundbeleuchtung aufweist, beispielsweise einer großflächigen OLED als Hintergrundbeleuchtung. Entsprechend können auch die dargestellten Informationen beispielsweise binärer Art sein (einfache An-Aus-Informationen, zum Beispiel bei leuchtenden Symbolen), oder können beispielsweise alphanumerische Informationen beinhalten, welche vorzugsweise auf einem segmentierten Display oder einem Matrix-Display dargestellt werden. Das Display selbst kann vorzugsweise ein Passiv-Matrix-Display umfassen, da die nachfolgend beschriebene Anzeigeeinrichtung derartige Displays besonders wirksam schützt. Dies schließt jedoch, alternativ oder zusätzlich, die Verwendung anderer Display-Betriebsarten beziehungsweise Display-Strukturen, wie beispielsweise Aktiv-Matrix-Displays, nicht aus. Auch Kombinationen der genannten Display-Arten sind möglich.

Das organische lichtemittierende Material kann vorzugsweise Polymere umfassen und/oder auch niedermolekulare organische Materialien. Vorzugsweise ist das Display mit dem mindestens einen organischen lichtemittierenden Material als OLED-Display, beispielsweise gemäß der obigen Beschreibung und/oder gemäß einem der im Stand der Technik aufgeführten Ausführungsbeispiele, ausgestaltet. Dies schließt jedoch anders gestaltete Displays mit organischen lichtemittierenden Materialien, beispielsweise Displays, in welchen organische lichtemittierende Materialien in anorganische Emittermaterialien eingebettet sind, nicht aus.

Die Anzeigeeinrichtung ist eingerichtet, um von der elektrischen Energieversorgung mit elektrischer Energie versorgt zu werden. Die elektrische Energieversorgung kann dabei beispielsweise unmittelbar in die Anzeigeeinrichtung selbst integriert sein oder kann, alternativ oder zusätzlich, auch extern angeordnet sein und kann beispielsweise Bestandteil des medizinischen Hilfsmittels sein, welches die Anzeigeeinrichtung umfasst, insbesondere in einem Gehäuse des medizinischen Hilfsmittels integriert sein. Die Anzeigeeinrichtung selbst kann dann beispielsweise entsprechende Schnittstellen oder Anschlüsse umfassen, über welche die Anzeigeeinrichtung durch die elektrische Energieversorgung mit elektrischer Energie beaufschlagt werden kann.

Dabei können prinzipiell beliebige Arten derartiger Energieversorgungen zum Einsatz kommen. So kann die elektrische Energieversorgung beispielsweise ein Stromkabel und/oder eine Schnittstelle zur externen Bereitstellung einer elektrischen Spannung und/oder eines elektrischen Stromes umfassen, was beispielsweise bei stationären Laborgeräten von Vorteil sein kann. Bevorzugt ist es jedoch, wenn die elektrische Energieversorgung an ein Erfordernis einer Mobilität des die Anzeigeeinrichtung umfassenden medizinischen Hilfsmittels angepasst ist, so dass besonders bevorzugt eine herausnehmbare Energieversorgung eingesetzt wird. So kann die elektrische Energieversorgung insbesondere einen oder mehrere auswechselbare Energiespeicher umfassen, beispielsweise einen auswechselbaren Akkumulator und/oder eine auswechselbare Batterie. Die Auswechselbarkeit kann dabei beispielsweise durch entsprechende Klappen, Schieber, Aufnahmen für den auswechselbaren Energiespeicher oder ähnliche Vorrichtungen gewährleistet sein, welche an der Anzeigeeinrichtung selbst und/oder an dem medizinischen Hilfsmittel (beispielsweise in einem Gehäuse desselben) vorgesehen sein können. Die Energieversorgung kann zusätzlich zur Versorgung der Anzeigeeinrichtung auch zur Versorgung anderer Bauteile beziehungsweise Funktionen des medizinischen Hilfsmittels genutzt werden, beispielsweise zur Energieversorgung einer zentralen Steuerung des medizinischen Hilfsmittels.

Die Anzeigeeinrichtung weist weiterhin eine Ansteuervorrichtung zur Ansteuerung des Displays auf, welche wiederum einen Displaytreiber umfasst. Diese Ansteuervorrichtung ist eingerichtet, um das Display in einem regulären Betriebsmodus zur Darstellung der Information anzusteuern. Unter einem "regulären Betriebsmodus" ist dabei ein Betriebsmodus der Anzeigeeinrichtung zu verstehen, bei welcher die Ansteuervorrichtung mit Informationsdaten beaufschlagt wird, welche beispielsweise von einer Steuerung des medizinischen Hilfsmittels bereitgestellt werden und welche dann befehlsgemäß auf dem Display beziehungsweise durch das Display dargestellt werden. Dies ist der Normalbetrieb der Anzeigeeinrichtung beziehungsweise des medizinischen Hilfsmittels, bei welcher beide Elemente eingeschaltet sind.

Unter einem "Displaytreiber" ist eine elektronische Einrichtung zu verstehen, welche die korrekte Wiedergabe der Bildinformationen auf dem Display gewährleistet. Insbesondere im Fall eines OLED-Displays, aber auch bei anderen Arten von Displays, kann beispielsweise der Displaytreiber derart ausgestaltet sein, dass dieser die Ströme durch mindestens einen Display-Bildpunkt (Pixel) steuert. Da die Helligkeit dieser Bildpunkte in vielen Fällen zumindest näherungsweise proportional zur Stromdichte ist, lässt sich dadurch die Helligkeit einzelner Bildpunkte gezielt ansteuern. In diesem Fall stellt der Displaytreiber also eine Stromregelung für die einzelnen Bildpunkte bereit, beispielsweise eine Stromregelung für einzelne Zeilen und/oder Spalten des Displays.

Die Ansteuervorrichtung kann neben dem mindestens einen Displaytreiber (es können sinngemäß auch mehrere derartiger Displaytreiber vorgesehen sein, beispielsweise um unterschiedliche Bereiche des Displays anzusteuern) weitere Elemente umfassen. Diese weiteren Elemente können beispielsweise passive und/oder aktive elektronische Komponenten umfassen. Weiterhin ist es bevorzugt, wenn diese weiteren Komponenten mindestens ein Datenverarbeitungsgerät umfassen, beispielsweise einen Mikroprozessor.

Vorzugsweise ist die Ansteuervorrichtung dezentral aufgebaut. Zu diesem Zweck kann beispielsweise der mindestens eine Displaytreiber in unmittelbarer Nähe des Displays angeordnet sein, beispielsweise auf einem Substrat (Panel) des Displays und/oder auf einer vorzugsweise flexiblen Zuleitung (Flex-Kabel) zu diesem Display-Panel. Weitere Komponenten der Ansteuervorrichtung können dann in unmittelbarer Nähe des Displaytreibers angeordnet sein oder können, alternativ oder zusätzlich, auch entfernt von diesem Displaytreiber angeordnet sein, beispielsweise auf einer separaten Elektronikplatine. Auf diese Weise lässt sich eine optimale Raumausnutzung gewährleisten, was insbesondere für mobile medizinische Hilfsmittel von Vorteil ist.

Insofern kann die Anzeigeeinrichtung beispielsweise kommerziell erhältlichen Anzeigeeinrichtungen entsprechen. Wie oben beschrieben, liegt die Problematik derartiger Anzeigeeinrichtungen jedoch in möglichen Beschädigungen durch ungeregelte Spannungszustände, welche insbesondere bei einem abrupten Abfall der elektrischen Energieversorgung auftreten können. Gerade in dem Fall, in welchem der Displaytreiber in unmittelbarer Nähe des Displays, beispielsweise auf dem Display-Panel und/oder auf einer flexiblen Zuleitung zu diesem Display-Panel, angeordnet ist, ist es technisch sehr schwierig, die Korrektheit der Ansteuerung zwischen Displaytreiber und dem eigentlichen Display zu überprüfen, ohne in die Hardware des Displaytreibers (welche beispielsweise als anwendungsspezifischer integrierter Schaltkreis, ASIC ausgestaltet sein kann) einzugreifen.

Erfindungsgemäß wird daher vorgeschlagen, dass die Ansteuervorrichtung eine Schutzschaltung umfasst. Diese Schutzschaltung kann als einzelne Schaltung ganz oder teilweise in die Ansteuervorrichtung integriert sein oder kann mehrere Komponenten umfassen. Die Schutzschaltung ist eingerichtet, um ein von der elektrischen Energieversorgung bereitgestelltes elektrisches Signal zu überwachen und bei einer Abweichung des elektrischen Signals von einem Normbereich die Anzeigeeinrichtung in einen Sicherheitszustand zu schalten.

Beispielsweise kann das mindestens eine von der elektrischen Energieversorgung bereitgestellte elektrische Signal eine oder mehrere elektrische Spannungen und/oder einen oder mehrere elektrische Ströme umfassen. So kann insbesondere eine an die Ansteuervorrichtung und/oder den Displaytreiber und/oder an das Display bereitgestellte Spannung überwacht werden. Dabei kann das von der elektrischen Energieversorgung bereitgestellte elektrische Signal beispielsweise unmittelbar eine Spannung und/oder einen Strom der elektrischen Energieversorgung umfassen. Unter "unmittelbar" ist dabei zu verstehen, dass das Signal der elektrischen Energieversorgung ohne Zwischenschaltung aktiver und/oder passiver Komponenten überwacht wird, welche einen wesentlichen Einfluss auf den Betrag und/oder eine Phase und/oder eine Frequenz dieses Signals haben. Bei einer Gleichspannungsquelle wie beispielsweise einer Batterie kann beispielsweise unmittelbar eine Versorgungsspannung dieser Gleichspannungsquelle überwacht werden. Alternativ oder zusätzlich kann das von der elektrischen Energieversorgung bereitgestellte elektrische Signal jedoch auch ein mittelbares Signal sein, beispielsweise ein spannungskonvertiertes Signal. So kann beispielsweise zwischen die elektrische Energieversorgung und einen Mikroprozessor der Anzeigeeinrichtung ein Spannungskonverter (beispielsweise ein DC/DC-Konverter) aufgenommen werden, welcher eine konvertierte und/oder konstant gehaltene Versorgungsspannung für den Mikroprozessor erzeugt. Auch diese Versorgungsspannung kann als "mittelbares" Signal überwacht werden. Sowohl die Überwachung unmittelbar von der elektrischen Energieversorgung bereitgestellter elektrischer Signale als auch die Überwachung "mittelbarer", d.h. unter Zwischenschaltung aktiver und/oder passiver Komponenten von einem unmittelbaren Signal abgeleiteter Signale ist somit möglich und soll von der vorliegenden Erfindung erfasst sein.

Die Überwachung kann auf verschiedene Weisen erfolgen. So kann beispielsweise überwacht werden, ob das elektrische Signal innerhalb mindestens eines vorgegeben Normbereichs liegt, welcher beispielsweise in Form eines geschlossenen und/oder offenen und/oder halb offenen Werte-Intervalls angegeben werden kann. Das elektrische Signal kann beispielsweise mit einem oder mehreren festen Sollwerten verglichen werden, oder es können, alternativ oder zusätzlich, auch zeitlich variierende Sollwerte und/oder Normbereiche vorgegeben werden, beispielsweise verschiedene Normbereiche für verschiedene Betriebszustände des Displays. Der Normbereich muss auch nicht notwendigerweise zeitlich konstant sein, sondern es können beispielsweise auch sinngemäß Sollwert-Funktionen oder Normbereichsfunktionen als Funktion einer Zeitvariablen vorgegeben werden, welche mit einem zeitlichen Verlauf des elektrischen Signals verglichen werden.

Da insbesondere rapide abfallende Energieversorgungen Probleme bereiten können, ist es besonders bevorzugt, wenn das mindestens eine elektrische Signal mit einem Schwellwert verglichen wird, so dass der Normbereich beispielsweise der Bereich unterhalb oder oberhalb dieses Sollwertes ist. Wenn der Sollwert beispielsweise eine vorgegebene Spannung A ist, so kann der Normbereich beispielsweise alle Spannungswerte umfassen, welche größer sind als A oder welche größer oder gleich A sind oder welche kleiner sind als A oder welche kleiner oder gleich A sind. So kann beispielsweise erkannt werden, ob eine vorgegebene Mindestspannung unterschritten wird und/oder ob eine vorgegebene Maximalspannung überschritten wird. So können beispielsweise auch Überspannungen detektiert werden und zu einer Überführung in den Sicherheitszustand führen. Es können auch zwei Spannungswerte A und B mit A<B als Sollwerte vorgegeben werden, wobei der Normbereich für die Spannung V beispielsweise A≤V≤B oder A≤V≤B oder A≤V≤B oder A<V<B umfassen kann. Dabei können jeweils auch Toleranzschwellen vorgegeben werden.

Die Ansteuervorrichtung ist dabei derart ausgestaltet, dass diese bei einer Abweichung vom Normbereich die Anzeigeeinrichtung in einen Sicherheitszustand schaltet. Der Sicherheitszustand kann einen oder mehrere beliebige Zustände beinhalten, in welchen eine Schädigung des Displays vermieden wird. Unter einem "Zustand" ist dabei nicht notwendigerweise ein gleich bleibender, das heißt statischer Modus zu verstehen, sondern unter einem "Zustand" kann auch eine Sicherheitsprozedur oder ein Programmablauf verstanden werden. So kann insbesondere der Sicherheitszustand ein definiertes Abschalten einer Treiberspannung und/oder eines Treiberstroms des Displays umfassen, welches vorzugsweise derart ausgestaltet ist, dass bei diesem Abschalten keine ungeregelten Zustände auftreten können. Auf diesen Aspekt wird unten bei der Beschreibung weiterer bevorzugter Ausführungsbeispiele noch näher eingegangen. Prinzipiell kann ein Sicherheitszustand jedoch einen beliebigen, sich vom regulären Betriebsmodus unterscheidenden Zustand beinhalten, in welchem das Auftreten überhöhter Ströme und/oder Spannungen am Display, insbesondere an einzelnen Bildpunkten des Displays, vermieden oder verhindert wird.

Die vorgeschlagene Anzeigeeinrichtung mit der Schutzschaltung verhindert somit in der Regel wirkungsvoll, dass bei einer plötzlichen Unterbrechung der elektrischen Energieversorgung ungeregelte Zustände am Display auftreten können, welche das Display (zum Beispiel einzelne oder mehrere Bildpunkte eines Matrix-Displays) schädigen können. So können beispielsweise kurzfristige Überspannungen und/oder übermäßige Strombelastungen an einzelnen oder mehreren Bildpunkten des Displays vermieden werden. Dadurch steigt beim regulären Abschalten der Anzeigeeinrichtung der Schutz des Displays, und die Lebensdauer und Fehlersicherheit der Anzeigeeinrichtung wird erheblich erhöht. Zudem wird auch bei einem irregulären Abschalten, beispielsweise bei einem Herausnehmen von Akkumulatoren und/oder Batterien im eingeschalteten Zustand der Anzeigeeinrichtung oder bei einem Herunterfallen der Anzeigeeinrichtung und dabei einem Herausfallen der Batterien ein kurzfristig auftretender ungeregelter Zustand verhindert. Die Produktqualität und Produktlebensdauer der Anzeigeeinrichtung und/oder des die Anzeigeeinrichtung umfassenden medizinischen Hilfsmittels wird dadurch erheblich verbessert.

Die Anzeigeeinrichtung lässt sich auf verschiedene Weise vorteilhaft weiterbilden. Diese und die bereits genannten bevorzugten Weiterbildungen der Erfindung können einzeln oder in Kombination verwirklicht sein.

So ist es insbesondere bevorzugt, wenn die Schutzschaltung derart eingerichtet ist, dass der Sicherheitszustand bei einem abrupten Abfall der von der elektrischen Energieversorgung bereitgestellten elektrischen Energie gewährleistet, dass ein Betrieb des Displaytreibers mindestens so lange aufrechterhalten wird wie das Display mit elektrischer Energie versorgt wird. Auf diese Weise ist sichergestellt, dass das Display mittels des Displaytreibers bis zum letzten kritischen Moment, also so lange, wie das Display selbst mit Energie beaufschlagt wird, auf geregelte Weise mit Energie versorgt wird. Ungeregelte Zustände können hierbei somit vorzugsweise nicht auftreten.

Weiterhin ist es bevorzugt, wenn in dem Sicherheitsmodus mindestens ein kapazitives Element definiert entladen wird. Kapazitive Elemente in der Verbindung zwischen der elektrischen Energieversorgung und dem Display und/oder dem Displaytreiber tragen wesentlich zum Timing eines Abschaltvorgangs bei, da diese (gemeinsam mit elektrischen Widerständen) beispielsweise Zeitkonstanten eines Entladevorgangs bestimmen. Auf diese Weise kann beispielsweise das zuvor genannte bevorzugte Timing des Abschaltprozesses, bei welchem das Display bis zuletzt geregelt betrieben wird, gewährleistet werden. Zudem können insbesondere an großen kapazitiven Elementen noch lange nach einem Zusammenbrechen der Energieversorgung hohe Spannungen anliegen, welche ausreichen, um beispielsweise das Display weiterhin mit Energie zu versorgen, wohingegen beispielsweise der Displaytreiber bereits abgeschaltet ist. Insbesondere in diesem Fall kann es zu undefinierten, ungeregelten Zuständen kommen. Durch das definierte Entladen des kapazitiven Elementes im Sicherheitszustand kann eine Schädigung der Anzeigeeinrichtung durch diese ungeregelten Zustände vermieden werden. Das kapazitive Element kann neben oder zusätzlich zu Kondensatoren auch beispielsweise einfache Leitungen oder andere Bauelemente umfassen, an denen sich nach dem Abschalten noch eine Spannung aufrechterhalten kann.

Für das definierte Entladen des mindestens einen kapazitiven Elementes kann insbesondere die Schutzschaltung mindestens einen Entladeschalter aufweisen. Dieser mindestens eine Entladeschalter kann beispielsweise als Transistorschaltung ausgestaltet sein und kann durch die Schutzschaltung beziehungsweise die Ansteuervorrichtung derart geschaltet werden, dass dieser das definierte Entladen des mindestens einen kapazitiven Elementes bewirkt. Insbesondere kann das mindestens eine kapazitive Element dabei ein kapazitives Element zwischen der Energieversorgung und dem Displaytreiber umfassen. Der Entladeschalter kann vorzugsweise durch einen Mikroprozessor, insbesondere einen Mikroprozessor der Ansteuervorrichtung, geschaltet werden. Dieser Mikroprozessor kann dabei Mehrfachfunktionen übernehmen und kann beispielsweise auch eine Ansteuerung des Displaytreibers zur Aufgabe haben.

Das mindestens eine kapazitive Element kann beispielsweise zwei oder mehrere einzelne kapazitive Elemente umfassen, welche insgesamt eine Glättung eines über den Displayversorgungspfad bereitgestellten elektrischen Signals bewirken. Diese beiden einzelnen kapazitiven Elemente können auch durch einen Schalter im Displayversorgungspfad trennbar sein. So kann beispielsweise ein elektrischer Schalter in den Displayversorgungspfad integriert sein, welcher im Sicherheitszustand geöffnet wird. Beispielsweise kann dieser Schalter ebenfalls über den Mikroprozessor geschaltet werden, beispielsweise gleichzeitig oder lediglich leicht zeitversetzt zu einem Schalten des Entladeschalters. Beispielsweise können beide Elemente über eine gleiche Steuerleitung angesteuert werden. Dieser Schalter kann somit einen weiteren Bestandteil der Schutzschaltung bilden. Vorzugsweise trennt der Entladeschalter die beiden einzelnen kapazitiven Elemente derart, dass nach dem Öffnen des Schalters nur noch eine kleine Kapazität mit dem Displaytreiber verbunden ist, wohingegen ein größerer Bestandteil des kapazitiven Elements vom Displaytreiber getrennt ist.

Besonders bevorzugt ist eine Ausgestaltung, in welcher die elektrische Energieversorgung über einen Displayversorgungspfad eine elektrische Energie zum Betreiben des Displays bereitstellt. Unter einem "Pfad" sind dabei eine oder mehrere Verbindungen, insbesondere Verbindungsleitungen zu verstehen, welche beispielsweise elektrische oder optische Signale leiten können. Das kapazitive Element ist dabei in diesen Displayversorgungspfad integriert. Weiterhin ist bei dieser bevorzugten Ausführungsform die elektrische Energieversorgung über einen Treiberversorgungspfad mit dem Displaytreiber verbunden und stellt eine elektrische Energie zum Betreiben dieses Displaytreibers zur Verfügung. In den Treiberversorgungspfad ist dann vorzugsweise eine Treiberkapazität integriert, wobei sinngemäß wiederum auch mehrere Kapazitäten umfasst sein können. Dabei sind dann vorzugsweise das kapazitive Element, die Treiberkapazität und der Entladeschalter derart dimensioniert, dass bei einer Unterbrechung der elektrischen Energieversorgung das kapazitive Element in dem Displayversorgungspfad schneller entladen wird als die Treiberkapazität. Unter "schneller entladen" ist dabei vorzugsweise ein Zustand zu verstehen, bei welchem die im Displayversorgungspfad anliegende Spannung vor der im Treiberversorgungspfad anliegenden Spannung zusammenbricht, das heißt früher unter einen für die Displayversorgung erforderlichen minimalen Wert absinkt als dass die im Treiberversorgungspfad anliegende Spannung unter einen für den Betrieb des Displaytreibers erforderliche Minimalspannung sinkt. In anderen Worten wird bei dieser Ausführungsform sichergestellt, dass der Displaytreiber zeitlich nicht vor oder vorzugsweise erst nach der Einstellung des Displaybetriebes abschaltet, so dass der Displaybetrieb bis zum letzten Moment geregelt wird. Auf diese Weise lässt sich das Timing des Abschaltvorgangs genau definieren, ohne dass ungeregelte Zustände am Display auftreten.

Um beim abrupten Abschalten der elektrischen Energieversorgung weiterhin ein unerwünschtes Entladen der Treiberkapazität in eine andere Richtung als über den Displaytreiber zu verhindern, können weiterhin in dem Treiberversorgungspfad eine oder mehrere Dioden aufgenommen sein. Beispielsweise kann diese Diode zwischen einen ersten DC/DC-Konverter und die Treiberkapazität aufgenommen werden, um eine Entladung der Treiberkapazität über den ersten DC/DC-Konverter zu verhindern.

Weiterhin kann der Displayversorgungspfad einen DC/DC-Konverter umfassen. Auch der Treiberversorgungspfad kann einen zweiten DC/DC-Konverter umfassen. Diese DC/DC-Konverter können eingerichtet sein, um eine von der elektrischen Energieversorgung bereitgestellte Spannung auf die erforderlichen Betriebsspannungen zum Betrieb des Displaytreibers und/oder der Ansteuervorrichtung und/oder zum Betrieb des Displays zu konvertieren. Dadurch lassen sich die erforderlichen Sollspannungen auch aus festgelegten, beispielsweise durch bestimmte Batterien und/oder Akkumulatoren vorgegebenen Spannungswerten generieren und konstant erhalten.

Zum Überwachen des mindestens einen elektrischen Signals mit dem Normbereich und der Feststellung einer Abweichung kann die Schutzschaltung insbesondere einen Komparator umfassen, welcher beispielsweise eine von der elektrischen Energieversorgung bereitgestellte Spannung und/oder einen von der elektrischen Energieversorgung bereitgestellten Strom mit dem Sollwert vergleicht. Dieser Komparator, wobei sinngemäß auch mehrere Komparatoren vorgesehen sein können, kann ein oder mehrere diskrete elektronische Bausteine umfassen. Besonders bevorzugt ist es jedoch, wenn der Komparator zumindest teilweise in einen Mikroprozessor, vorzugsweise einen Mikroprozessor der Ansteuervorrichtung, integriert ist. So kann der Komparator beispielsweise ganz oder teilweise durch Softwarekomponenten, welche in dem Mikroprozessor ablaufen, und/oder durch in den Mikroprozessor integrierte Hardwarekomponenten, realisiert werden.

Wird das mindestens eine elektrische Signal mit einem oder mehreren Sollwerten verglichen, um eine Abweichung von einem Normbereich festzustellen, so kann der Sollwert beispielsweise durch eine an dem Komparator anliegende Referenzspannung charakterisiert werden. Werden komplexere Sollwerte gewünscht, so kann diese Referenzspannung beispielsweise auch mehrere einzelne Referenzspannungen umfassen, eine oder mehrere zeitlich variierende Referenzspannungen oder Referenzspannungsfunktionen als Funktion der Zeit. Insbesondere bei der Integration in einen Mikroprozessor ist diese Vorrichtungsvariante leicht realisierbar. Die Referenzspannung kann zumindest teilweise von dem Mikroprozessor bereitgestellt werden, da dieser in der Regel definierte Spannungsausgänge bereitstellt. Alternativ oder zusätzlich können auf eine oder mehrere der Referenzspannungen extern angelegt werden und beispielsweise durch eine Konstantspannungsquelle bereitgestellt werden.

Wie oben beschrieben, umfasst die Schutzschaltung vorzugsweise ein Datenverarbeitungsgerät, insbesondere einen Mikroprozessor. Dieser Mikroprozessor beziehungsweise das Datenverarbeitungsgerät kann insbesondere eingerichtet sein, um ein Ansteuerprogramm zur Ansteuerung des Displays durchzuführen. Neben diesem Datenverarbeitungsgerät kann das medizinische Hilfsmittel, welches das Anzeigeelement umfasst, weitere Datenverarbeitungsgeräte, beispielsweise weitere Mikroprozessoren, umfassen, welche andere Funktionen übernehmen können, beispielsweise Funktionen bei der Analyse einer flüssigen Probe (zum Beispiel einer Blutprobe auf einen Blutglucosegehalt). Sind mehrere Datenverarbeitungsgeräte, insbesondere Mikroprozessoren, vorgesehen, so können diese vorzugsweise auch im Master-Slave-Betrieb genutzt werden, wobei beispielsweise mindestens ein Mikroprozessor der Schutzschaltung beziehungsweise der Ansteuervorrichtung als Master genutzt werden kann, und ein weiterer Mikroprozessor des medizinischen Hilfsmittels als Slave. Auch eine umgekehrte Ausgestaltung ist möglich, in welcher das Datenverarbeitungsgerät der Ansteuervorrichtung beziehungsweise der Schutzschaltung als Slave eingesetzt wird.

Das Datenverarbeitungsgerät der Schutzschaltung beziehungsweise der Ansteuerschaltung kann insbesondere eingerichtet sein, um in dem Sicherheitszustand das Ansteuerprogramm zu unterbrechen und ein Abschaltprogramm durchzuführen. Dieses Unterbrechen kann beispielsweise in Form eines Interrupts erfolgen, durch welchen das Ansteuerprogramm, welches das Display im regulären Betriebsmodus betreibt, unterbrochen wird. Wird beispielsweise festgestellt, dass das von der elektrischen Energieversorgung bereitgestellte elektrische Signal einen Sollwert (beispielsweise eine Minimalspannung) unterschreitet, so kann beispielsweise ein Flag (das heißt eine bestimmte, vorzugsweise boolsche Betriebsvariable) auf einen Unterbrechungswert gesetzt werden, und es kann über den Interrupt die laufende Programmausführung des regulären Ansteuerprogramms des regulären Betriebsmodus unterbrochen und auf das Abschaltprogramm umgeschaltet werden.

Wie oben beschrieben, kann das Datenverarbeitungsgerät der Anzeigeeinrichtung insbesondere der Ansteuervorrichtung und/oder der Schutzschaltung, weitere Funktionen der Anzeigeeinrichtung beziehungsweise des medizinischen Hilfsmittels übernehmen. Besonders bevorzugt ist es, wenn das Datenverarbeitungsgerät weiterhin auch eingerichtet ist, um den Displaytreiber anzusteuern.

Die oben beschriebene Anzeigeeinrichtung in einer der beschriebenen Ausführungsformen, welche, wie ausgeführt, auch unabhängig von einem medizinischen Hilfsmittel eingesetzt werden kann, ist für den Einsatz in medizinischen Hilfsmitteln, insbesondere in tragbaren Blutglucosemessgeräten, besonders geeignet. So lassen durch die vorgeschlagene Anzeigeeinrichtung die technisch vorteilhaften OLED-Displays einsetzen, wobei die technischen Nachteile dieser Display-Elemente durch die vorgeschlagene Schutzschaltung vermieden bzw. vermindert werden können. Hierdurch überwiegen die Vorteile dieser Art von Anzeigenelementen, insbesondere der hohe Betrachtungswinkel, der scharfe Kontrast und die selbstleuchtenden Eigenschaften derartiger Displays, welche beispielsweise keine Hinterleuchtung benötigen.

Neben dem vorgeschlagenen medizinischen Hilfsmittel und der Anzeigeeinrichtung in einer der dargestellten Ausführungsformen wird weiterhin ein Verfahren zur Ansteuerung einer Anzeigeeinrichtung zur optischen Darstellung einer Information vorgeschlagen. Bei der Anzeigeeinrichtung kann es sich insbesondere um eine Anzeigeeinrichtung in einer der oben beschriebenen Ausführungsformen handeln, so dass bezüglich optionaler, bevorzugter Verfahrensvarianten auf die obige Beschreibung verwiesen werden kann. Die Anzeigeeinrichtung umfasst wiederum ein Display mit mindestens einem organischen lichtemittierenden Material, eine elektrische Energieversorgung und eine Ansteuervorrichtung zur Ansteuerung des Displays sowie einen Displaytreiber. Das Display wird im eingeschalteten Zustand der Anzeigeeinrichtung in einem regulären Betriebsmodus zur Darstellung der Information angesteuert. Dabei wird, analog zur obigen Beschreibung, ein von der elektrischen Energieversorgung bereitgestelltes elektrisches Signal überwacht, und bei einer Abweichung von einem Normbereich wird die Anzeigeeinrichtung in einen Sicherheitszustand geschaltet.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigt:
- Figur 1: ein Ausführungsbeispiel eines medizinischen Hilfsmittels mit einer Anzei- geeinrichtung;
- Figur 2: ein Blockdiagramm eines ersten Ausführungsbeispiels einer erfindungsge- mäßen Anzeigeeinrichtung; und
- Figur 3: ein Blockdiagramm eines zweiten Ausführungsbeispiels einer erfindungs- gemäßen Anzeigeeinrichtung.

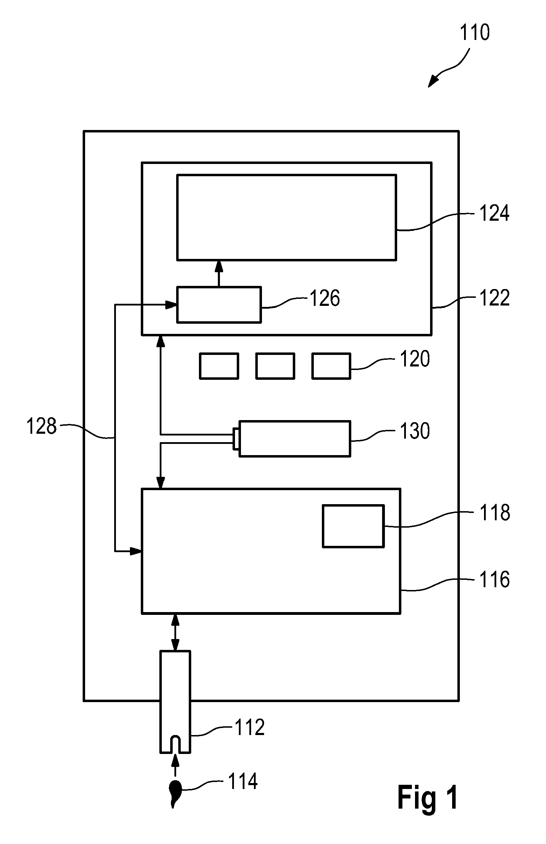

In Figur 1 ist schematisch ein mögliches Ausführungsbeispiel eines medizinischen Hilfsmittels 110 dargestellt. Das medizinische Hilfsmittel 110 ist in diesem Ausführungsbeispiel als portables Handgerät mit einem Gehäuse ausgestaltet und dient beispielsweise der Blutglucosemessung. Zu diesem Zweck umfasst das medizinische Hilfsmittel 110 ein analytisches Testelement 112. Dieses analytische Testelement 112 ist in Figur 1 symbolisch als Teststreifen dargestellt, auf welchen eine flüssige Probe 114 (ein Blutstropfen) aufgebracht werden kann, um dann, beispielsweise mittels eines elektrochemischen und/oder optischen Messverfahrens eine Analytkonzentration, im vorliegenden Fall eine Blutglucosekonzentration, in der flüssigen Probe 114 zu bestimmen.

Zur Auswertung der Messung umfasst das medizinische Hilfsmittel 110 weiterhin eine Steuerung 116, welche beispielsweise elektronische Komponenten für die Auswertung der Blutglucosemessung umfassen kann. Besonders bevorzugt ist es, wenn die Steuerung 116 einen Mikrocomputer 118 umfasst, auf welchem beispielsweise entsprechende Softwarealgorithmen zur Auswertung der Messung ablaufen können. Auch weitere Funktionen, wie beispielsweise Speicherfunktionen, Ein- und Ausgabefunktionen, Datenbankfunktionen oder Ähnliches können umfasst sein.

Weiterhin umfasst das medizinische Hilfsmittel 110 eine Reihe von Bedienelementen 120 zur Bedienung der Funktionen des medizinischen Hilfsmittels 110 sowie eine Anzeigeeinrichtung 122. Diese Anzeigeeinrichtung 122, welche zur visuellen Wiedergabe von Informationen dient, umfasst ein Display 124, bei welchem im Folgenden angenommen wird, dass es sich dabei um ein OLED-Display handelt. Alternativ oder zusätzlich können auch weitere Arten von Displays vorgesehen sein, beispielsweise einfache Leuchtfelder, Symbole, Batteriestandsanzeigen etc. Weiterhin sei im Folgenden angenommen, dass es sich bei dem Display 124 (ohne Beschränkung des Umfangs der Erfindung) um ein Passiv-Matrix-Display handelt.

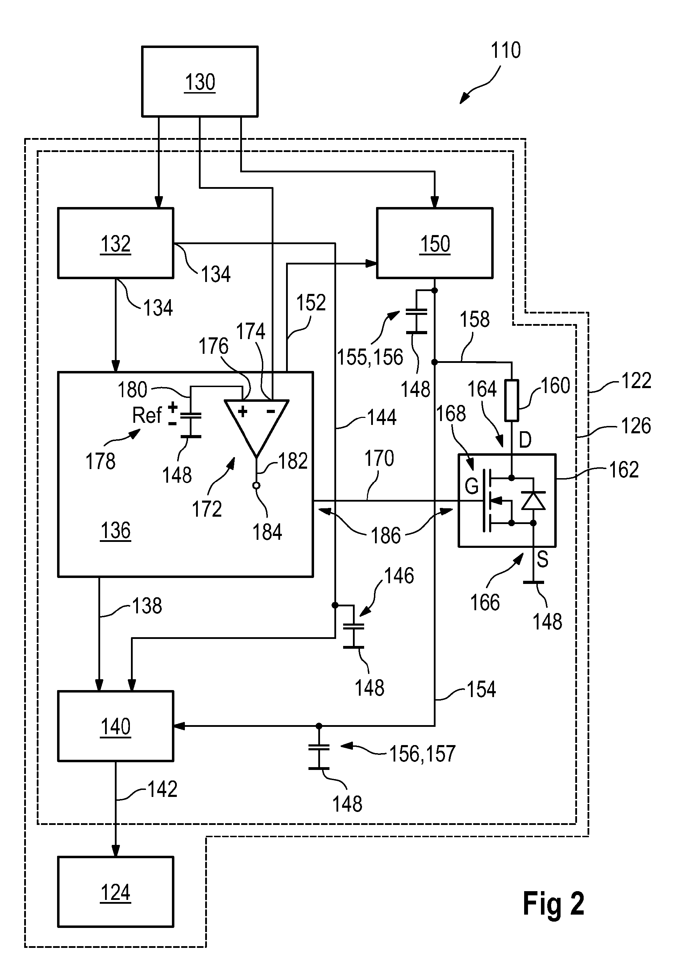

Die Anzeigeeinrichtung 122 umfasst weiterhin eine Ansteuervorrichtung 126 zur Ansteuerung des Displays 124. Diese Ansteuervorrichtung 126 ist in Figur 1 lediglich symbolisch dargestellt und wird im Folgenden näher erläutert. Die Ansteuervorrichtung 126 ist mit der Steuerung 116 über eine Datenverbindung 128 verbunden und kann somit Daten austauschen. Es sei darauf hingewiesen, dass die Ansteuervorrichtung 126 und die Steuerung 116 auch ganz oder teilweise bauteilidentisch realisiert werden können, beispielsweise indem die Steuerung 116 die Aufgaben der Ansteuervorrichtung 126 mit übernimmt. In diesem Fall kann die Steuerung 116 beispielsweise einen großen und leistungsfähigen Mikroprozessor umfassen, beispielsweise einen Mikroprozessor vom Typ ATMega2561 der Firma ATMEL in San José, USA,. Auch ein Master-Slave-Betrieb zwischen Steuerung 116 und Ansteuervorrichtung 126 ist denkbar, beispielsweise indem die Steuerung 116 einen ersten Mikroprozessor aufweist, welcher als Master für einen zweiten Mikroprozessor (siehe Bezugsziffer 136 in Figur 2 unten) der Ansteuervorrichtung 126 fungiert. In letzterem Falle kann der zweite Mikroprozessor beispielsweise etwas kleiner und leistungsschwächer dimensioniert werden, da dieser weniger Aufgaben übernehmen muss. So kann beispielsweise in letzterem Fall ein Mikroprozessor vom Typ ATMega168 verwendet werden.

Weiterhin weist das medizinische Hilfsmittel 110 gemäß dem Ausführungsbeispiel in Figur 1 eine elektrische Energieversorgung 130 auf, bei welcher es sich vorzugsweise um eine herausnehmbare elektrische Energieversorgung 130, beispielsweise eine oder mehrere Batterien und/oder Akkumulatoren, handeln kann. Die elektrische Energieversorgung 130 kann in diesem Ausführungsbeispiel gemäß Figur 1 beispielsweise die Anzeigeeinrichtung 122 und/oder die Steuerung 116 mit Energie versorgen. Auch weitere Systemfunktionen des medizinischen Hilfsmittels 110 können von der elektrischen Energieversorgung 130 mit Energie versorgt werden.

Das in Figur 1 dargestellte medizinische Hilfsmittel 110 ist lediglich symbolisch dargestellt und kann auf verschiedenste Weisen modifiziert werden. So können beispielsweise anstelle von Teststreifen als analytische Testelemente 112 auch andere Arten von Testelementen 112 eingesetzt werden, beispielsweise analytische Testbänder, Teströhrchen oder Ähnliches. Beispielsweise kann das medizinische Hilfsmittel 110 ein Bandgerät sein, bei welchem das analytische Testelement 112 ein Testband mit einer Vielzahl einzelner Testfelder umfasst. Auch andere Arten medizinischer Hilfsmittel 110 sind denkbar, wie beispielsweise kombinierte medizinische Hilfsmittel 110 mit beispielsweise einer Stechfunktion und einer Analysefunktion oder andere Arten medizinischer Hilfsmittel, wie beispielsweise ein oder mehrere der oben beispielhaft aufgeführten medizinischen Hilfsmittel 110, beispielsweise Blutdruckmessgeräte, Probengewinnungssysteme, Medikationsgeräte oder auch kombinierte Geräte mit mehreren Funktionen (z.B. ein integriertes Probengewinnungssystem mit einem Blutglucosemessgerät).

Auch die Anzeigeeinrichtung 122 mit ihren Elementen ist in Figur 1 lediglich stark schematisiert dargestellt. In Figur 2 ist ein mögliches Ausführungsbeispiel einer derartigen Anzeigeeinrichtung 122 dargestellt, welches beispielsweise in dem medizinischen Hilfsmittel 110 gemäß Figur 1 eingesetzt werden kann.

Die Anzeigeeinrichtung 122 in Figur 1 wird durch die elektrische Energieversorgung 130 mit elektrischer Energie versorgt. Die elektrische Energieversorgung 130 ist mit einem ersten DC/DC-Konverter 132 verbunden. Beispielsweise kann die elektrische Energieversorgung 130 zwei in Reihe geschaltete Batterien mit jeweils 1,65 V umfassen, wobei der erste DC/DC-Konverter 132 eingerichtet ist, um an seinen Ausgängen 134 eine konstante Spannung von 3,3 V aufrechtzuerhalten.

Der erste DC/DC-Konverter 132 ist weiterhin über seinen Ausgang 134 mit einem Mikroprozessor 136 der Ansteuervorrichtung 126 verbunden und versorgt diesen somit mit der konstanten Spannung von 3,3 V. Der Mikroprozessor 136 ist wiederum über eine Steuerleitung 138 mit einem Displaytreiber 140 verbunden, welcher über Bildleitungen 142 das Display 124 ansteuert, so dass die gewünschten Informationen dargestellt werden.

Der Ausgang 134 des ersten DC/DC-Konverters 132 ist weiterhin über einen Treiberversorgungspfad 144 mit dem Displaytreiber 140 verbunden, so dass über diesen Treiberversorgungspfad 144 der Displaytreiber 140 ebenfalls mit der Ausgangsspannung von vorzugsweise 3,3 V des ersten DC/DC-Konverters 132 beaufschlagt wird. In dem Treiberversorgungspfad 144 ist eine Treiberkapazität 146 integriert, welche an einem Ende auf Masse 148 geschaltet ist.

Die elektrische Energieversorgung 130 ist weiterhin mit einem zweiten DC/DC-Konverter 150 verbunden. Dieser DC/DC-Konverter konvertiert die Spannung der elektrischen Energieversorgung 130 von 3,3 V auf in diesem Ausführungsbeispiel ca. 13 V und hält diese Spannung dort konstant. Der zweite DC/DC-Konverter 150 ist über eine Steuerleitung 152 mit dem Mikroprozessor 136 verbunden und kann auf diese Weise durch diesen Mikroprozessor 136 gesteuert, das heißt insbesondere an- und abgeschaltet, werden.

Der zweite DC/DC-Konverter 150 ist über einen Displayversorgungspfad 154 mit dem Displaytreiber 140 verbunden und stellt auf diese Weise elektrische Energie zum Betreiben des Displays 124 bereit, im Gegensatz zum Treiberversorgungspfad 144, welcher elektrische Energie, das heißt insbesondere eine Spannung, für eine Steuerlogik des Displaytreibers 140 bereitstellt.

Im Displayversorgungspfad 154 ist, ähnlich zum Treiberversorgungspfad 144, ein kapazitives Element 156 integriert, welches sich in diesem Ausführungsbeispiel aus einem ersten kapazitiven Element 155, welches zwischen dem DC/DC-Konverter 150 und einer Abzweigung einer Entladeleitung 158 (siehe unten) angeordnet ist, und einem zweiten kapazitiven Element 157, welches zwischen der Abzweigung der Entladeleitung 158 und dem Displaytreiber 140 angeordnet ist, zusammensetzt. Die kapazitiven Elemente 155, 157 sind, analog zur Treiberkapazität 146, an einem Ende auf Masse 148 geschaltet. Beispielsweise kann das erste kapazitive Element 155 eine Kapazität von 4,7 Mikrofarad aufweisen und das zweite kapazitive Element 157 einen Wert von 26,7 Mikrofarad, so dass sich für das kapazitive Element 156 insgesamt eine Kapazität von 31,4 Mikrofarad ergibt. Auch andere Werte für die Kapazitäten der kapazitiven Elemente 155, 156, 157 oder eine andere Anordnung dieser kapazitiven Elemente 155, 156, 157 (beispielsweise eine andere Anzahl kapazitiver Elemente 155, 156, 157 und/oder eine andere Verschaltung dieser kapazitiven Elemente 155, 156, 157) ist möglich und für den Fachmann erkennbar und realisierbar. Die kapazitiven Elemente 155, 156, 157 bewirken gemeinsam eine Glättung eines über den Displayversorgungspfad 154 bereitgestellten elektrischen Signals. Die in dem Treiberversorgungspfad 144 aufgenommene Treiberkapazität 146 kann beispielsweise eine Kapazität von 0,5 Millifarad aufweisen, was die Kapazität des kapazitiven Elements 156 erheblich übersteigt und, wie im Folgenden näher beschrieben, bewirkt, dass bei einem abrupten Abschalten der elektrischen Energieversorgung 130 die Funktionalität des Displaytreibers 140 länger aufrechterhalten bleibt als die Funktionalität die Displayversorgung, so dass keine ungeregelten Spannungs- und/oder Stromzustände in der Versorgung des Displays 124 auftreten können.

Weiterhin zweigt vom Displayversorgungspfad 154 zwischen dem zweiten DC/DC-Konverter 150 und dem Displaytreiber 140 eine Entladeleitung 158 ab. Diese Entladeleitung 158 verbindet den Displayversorgungspfad 154 über einen Entladewiderstand 160 und einen Entladeschalter 162 mit der Masse 148. Beispielsweise kann für den Entladewiderstand 160 im Zusammenhang mit den oben genannten Kapazitäten oder mit einer ähnlichen Größenordnung und Verteilung der Kapazitäten ein Wert in der Größenordnung von 39 Ohm verwendet werden. In diesem Fall ergibt sich für eine Entladung der kapazitiven Elemente 155, 156, 157 über den Entladewiderstand 160 eine RC-Zeitkonstante von ca. 1,2 Millisekunden.

Der Entladeschalter 162 ist als Transistorschalter ausgestaltet, dessen Ein- und Ausgang das Drain 164 beziehungsweise die Source 166 darstellen. Das Gate 168 dieses Entladeschalters 162 ist über eine Steuerleitung 170 mit dem Mikroprozessor 136 verbunden, so dass der Entladeschalter 162 durch den Mikroprozessor 136 geschaltet werden kann.

Weiterhin umfasst die Ansteuervorrichtung 126 einen Komparator 172. Dieser Komparator 172 ist in diesem Ausführungsbeispiel als Teil des Mikroprozessors 136 ausgebildet. Ein Vergleichseingang 174 des Komparators 172 ist mit der elektrischen Energieversorgung 130 verbunden, so dass an diesem Vergleichseingang 174 beispielsweise unmittelbar eine elektrische Spannung der elektrischen Energieversorgung 130 anliegt, beispielsweise die oben erwähnten 3,3 V.

Ein Referenzeingang 176 ist mit einer Referenzspannungsquelle 178 verbunden, welche eine Referenzspannung bereitstellt. Diese Referenzspannung 180 kann beispielsweise bei 1,1 V liegen. Im vorliegenden Ausführungsbeispiel wird die Referenzspannung 180 durch eine interne Referenzspannung des Mikroprozessors 136 realisiert. Alternativ oder zusätzlich sind jedoch auch Komparatoren 172 mit externen Referenzspannungen realisierbar.

Der Signalausgang 182 des Komparators 172 ist mit einem Interrupt-Eingang 184 des Mikroprozessors 136 verbunden. In anderen Worten kann durch das Ausgangssignal des Komparators 172 ein Interrupt ausgelöst werden. Die Komponenten des Komparators 172 und der Interrupt-Eingang 184 können ganz oder teilweise durch den Mikroprozessor 136 realisiert sein und können beispielsweise ganz oder teilweise durch Software-Bausteine implementiert werden und/oder durch Hardwarekomponenten des Mikroprozessors 136.

Im vorliegenden Ausführungsbeispiel kann beispielsweise als elektrische Energieversorgung 130 eine Kombination zweier AAA-Batterien eingesetzt werden, um die Spannung von 3,3 V zu erzeugen. Als Mikroprozessor 136, das heißt als Displayprozessor, kann beispielsweise ein Prozessor ATMega168 der Firma ATMEL in San José, USA, verwendet werden. Als Komparator 172 und Referenzspannung 180 können die entsprechenden Funktionen dieses Displayprozessors verwendet werden, so dass keine zusätzlichen Komponenten erforderlich sind. Als Displaytreiber 140 kann beispielsweise ein Passiv-Matrix-OLED-Treiber-Controller vom Typ SSD 1325, SSD 1328 oder SSD 0323 der Firma Solomon Systech Ltd. in Glashütten, Deutschland, eingesetzt werden. Alternativ oder zusätzlich sind jedoch auch andere Arten von Displaytreibern 140 einsetzbar. Das Display 124 kann beispielsweise ein passiv-Matrix-Polymer-OLED-Display der Marke Pictiva von Osram Opto Semiconductors in Regensburg, Deutschland, umfassen.

Der Mikroprozessor 136 mit dem Komparator 172, die Steuerleitung 170, die Entladeleitung 158, der Entladewiderstand 160 und der Entladeschalter 162 bilden in diesem Ausführungsbeispiel Komponenten einer Schutzschaltung 186 der Ansteuervorrichtung 126.

Die Funktionsweise dieser Schutzschaltung 186 und der gesamten in Figur 2 dargestellten Ansteuervorrichtung 126 und der Anzeigeeinrichtung 122 sollen im Folgenden kurz dargestellt werden. Die oben beschriebenen Probleme ungeregelter Zustände in der Ansteuerung des Displays 126 treten insbesondere dann auf, wenn im eingeschalteten Zustand des medizinischen Hilfsmittels 110 die Batterien der elektrischen Energieversorgung 130 herausgenommen werden oder, beispielsweise durch einen Sturz, herausfallen. Beim Unterbrechen der Energieversorgung kann jedoch die über den Treiberversorgungspfad 144 an den Displaytreiber 140 bereitgestellte Betriebsspannung für die Steuerlogik des Displaytreibers 140 derart absinken, dass diese Steuerlogik zusammenbricht und das Display 124 in einem undefinierten, ungeregelten Zustand betrieben werden kann, während die über den Displayversorgungspfad 154 bereitgestellte Energieversorgung für das Display 124 noch weitgehend aufrechterhalten wird. Durch letztere Energieversorgung, welche nun nicht mehr geregelt wird, kann das Display 124 geschädigt werden, beispielsweise durch Überspannungen und/oder Überströme.

Die in Figur 2 dargestellte Lösung dieses Problems geht von einer kontinuierlichen Überwachung der Batteriespannung der elektrischen Energieversorgung 130 aus. Diese Überwachung erfolgt durch einen Vergleich der von der Energieversorgung 130 bereitgestellten Spannung in dem Komparator 172 mit einem Sollwert in Form der Referenzspannung 180 und schlägt so zeitig an, dass zum einen die Spannungsversorgungen (OLED-Versorgung und allgemeine Versorgung der Steuerelektronik) nicht in einen Zustand geraten können, der Schaden anrichten kann. Zum anderen wird das gesamt System in einen definierten Zustand gebracht, der ein reibungsloses Wiederanlaufen (zum Beispiel beim erneuten Einlegen einer Batterie) gewährleistet.

Zu diesem Zweck überwacht der Komparator 172 die an seinem Vergleichseingang 174 anliegende Batteriespannung laufend, wenn die Versorgung des OLED-Displays 124 eingeschaltet ist. Bei einem Spannungseinbruch unter die Referenzspannung 180, das heißt beispielsweise unterhalb von 1,1 V ± 0,1 V setzt der Komparator 172 ein Flag, also eine hierfür vorgesehene Betriebszustandsvariable, und löst einen Interrupt im Displayprozessor 136 aus. Dieser Interrupt unterbricht sofort die laufende Programmausführung, welche im regulären Betriebsmodus des medizinischen Hilfsmittels 110 beziehungsweise der Anzeigeeinrichtung 122 abläuft, und arbeitet nun ein Abschaltprogramm ab. Dieses Abschaltprogramm beinhaltet mehrere Schritte, mittels derer die Anzeigeeinrichtung 122 in einen sicheren, definierten Zustand gebracht wird, wobei auch während des Abschaltens keine ungeregelten Zustände auftreten können. Das Abschaltprogramm kann insbesondere die Versorgung des OLED-Displays 124 abschalten, kann das kapazitive Element 156 der Versorgung des OLED-Displays 124 entladen und kann das gesamte System definiert abschalten.

Dabei sollte diese Überwachung so früh auslösen, dass der Displayprozessor 136 noch genügend Zeit hat, die oben beschriebenen Aktionen durchzuführen. In der vorgeschlagenen Schaltung können beispielsweise ca. 20 bis 40 ms zur Verfügung stehen, da der erste DC/DC-Konverter 132, der die Versorgung der Steuerelektronik (das heißt des Mikroprozessors 136 und des Displaytreibers 140) konstant auf ca. 3,3 V hält, typischerweise bis hinunter zu einer Eingangsspannung von ca. 0,5 bis 0,8 V noch arbeitet.

Dies bedeutet also, dass, wenn die am Vergleichseingang 174 anliegende, von der elektrischen Energieversorgung 130 bereitgestellte Versorgungsspannung unter 1,1 V fällt, der Mikroprozessor 136 das Abschaltprogramm durchführen kann, in welchem über die Steuerleitung 170 der Entladeschalter 162 geschaltet wird. Durch dieses Schalten entsteht eine elektrische Verbindung zwischen Drain 164 und Source 166 dieses elektrischen Schalters 162. Dadurch wird das kapazitive Element 156 über den Entladewiderstand 160 definiert entladen, so dass die elektrische Energieversorgung des Displays 124 definiert heruntergefahren wird. Dabei sind die Kapazitäten 146 und 156 sowie der Entladewiderstand 160 derart dimensioniert, dass dieses Entladen des kapazitiven Elements 156 so schnell erfolgt, dass die Versorgungsspannung, welche insbesondere am Displaytreiber 140 anliegt, noch nicht auf eine minimale Versorgungsspannung, bei welcher dieser Displaytreiber 140 noch arbeitet, abgesunken ist. Beispielsweise kann, wie oben beschrieben, diese minimale Versorgungsspannung bei 0,5 bis 0,8 V liegen. Optional kann weiterhin das Abschaltprogramm auch ein Abschalten des zweiten DC/DC-Konverters 150 durch den Mikroprozessor 136 über die Steuerleitung 152 umfassen. Durch diese einfachen Schutzmaßnahmen kann die Lebensdauer des Displays 124 erhöht werden, und es können spontane Ausfälle dieses Displays 124 vermieden werden.

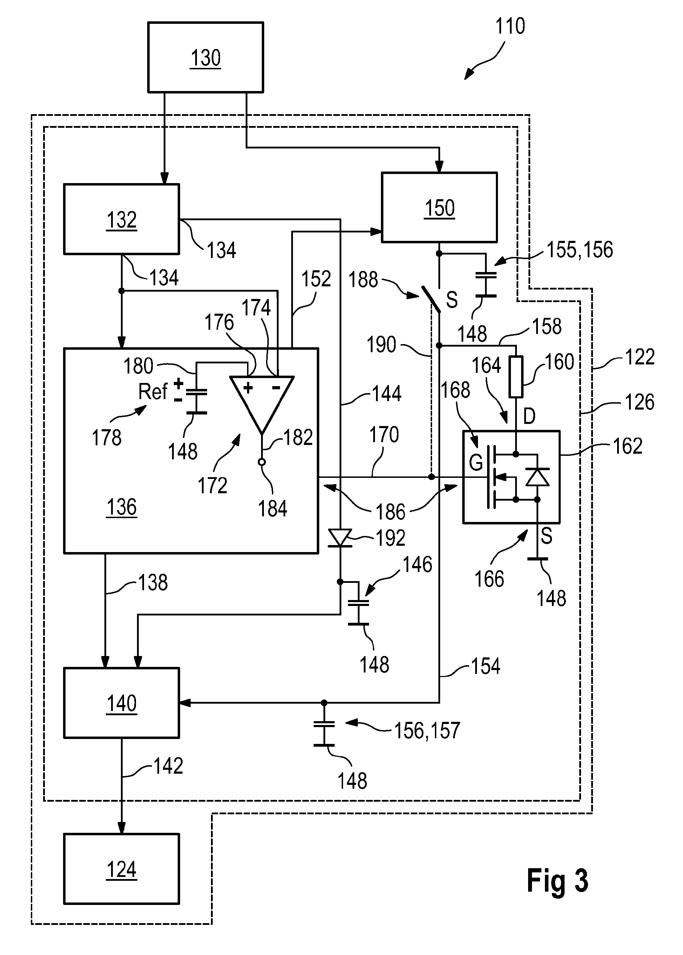

In Figur 3 ist ein zweites Ausführungsbeispiel einer Anzeigeeinrichtung 122 dargestellt, welche gegenüber dem Ausführungsbeispiel in Figur 2 leicht modifiziert ist. Die Modifikationen gegenüber dem Ausführungsbeispiel in Figur 2 sind nicht nur, wie in Figur 3 dargestellt, in Kombination realisierbar, sondern, wie der Fachmann erkennt, auch einzeln.

Eine wesentliche Modifikation gegenüber der in Figur 2 dargestellten Ausführungsform besteht bei der Anzeigeeinrichtung 122 in Figur 3 darin, dass der Komparator 172 nicht unmittelbar das von der elektrischen Energieversorgung 130 bereitgestellte Signal überwacht, sondern das von dem ersten DC/DC-Konverter 132 an den Mikroprozessor 136 bereitgestellte Versorgungssignal. Dies zeigt, dass im Sinne der vorliegenden Erfindung es zwar einerseits möglich ist, das von der elektrischen Energieversorgung 130 bereitgestellte elektrische Signal unmittelbar, das heißt ohne Zwischenschaltung weiterer elektrischer Elemente, zu überwachen, dass jedoch auch eine indirekte Überwachung unter Zwischenschaltung weiterer elektrischer Elemente möglich ist. Diese weiteren elektrischen Elemente sollten dabei jedoch derart ausgestaltet sein, dass das von diesen erzeugte Sekundärsignal (in diesem Fall gemäß Figur 2 das am Ausgang 134 des ersten DC/DC-Konverters bereitgestellte Versorgungssignal für den Mikroprozessor 136) einen Rückschluss auf das Signal der elektrischen Energieversorgung 130 ermöglicht.

Diese Überwachung des Signals des ersten DC/DC-Konverters 132 durch den Komparator 172 ist auch in dem in Figur 2 dargestellten Ausführungsbeispiel realisierbar, bei welchem als Komparator 172 ein frei programmierbarer Komparator (beispielsweise des Prozessors ATMega168) verwendet wird. Eine alternative Möglichkeit, welche die Überwachung der elektrischen Energieversorgung des Mikroprozessors 136 gemäß dem Ausführungsbeispiel in Figur 3 ermöglicht, besteht jedoch auch darin, anstelle eines frei programmierbaren Komparators oder eines sonstigen Komparators 172 einen so genannten Brownout-Detektor des Mikroprozessors 136 zu verwenden. Ein derartiger Brownout-Detektor ist eingerichtet, um das Absinken einer Versorgungsspannung eines Mikrocontrollers zu überwachen, beispielsweise eines Mikroprozessors vom Typ ATMega2561. Zu diesem Zweck wird diese Versorgungsspannung, ähnlich zu dem in Figur 2 beschriebenen Aufbau, mit einer Referenzspannung einer Referenzspannungsquelle 178 verglichen, wobei jedoch in diesem Fall üblicherweise die Referenzspannungen nicht frei programmierbar sind, sondern vom Mikroprozessor 136 fest vorgegeben sind. Ansonsten ist die Verschaltung jedoch weitgehend analog zum oben anhand von Figur 2 beschriebenen Ausführungsbeispiel, so dass beispielsweise wiederum auch ein Interrupt über den Interrupt-Eingang 184 ausgelöst werden kann.

Der übrige Aufbau des Ausführungsbeispiels in Figur 3 erfolgt wiederum analog zum Ausführungsbeispiel gemäß Figur 2, so dass weitgehend auf die obige Beschreibung verwiesen werden kann. Wiederum weist das kapazitive Element 156 zwei einzelne kapazitive Elemente 155, 157 auf, wobei das erste dieser kapazitiven Elemente 155 vor der Abzweigung der Entladeleitung 158 im Displayversorgungspfad 154 angeordnet ist, das zweite kapazitive Element 157 nach dieser Abzweigung. In diesem Ausführungsbeispiel kann beispielsweise das erste kapazitive Element 155 einen Wert von 150 Mikrofarad annehmen, das zweite kapazitive Element 157 einen Wert von 4,7 Mikrofarad. Es ergibt sich somit eine Gesamtkapazität des kapazitiven Elements 156 von 154,7 Mikrofarad, was eine Glättung des über den Displayversorgungspfad 154 bereitgestellten elektrischen Signals bewirkt.

Weiterhin ist in Figur 3 eine weitere Möglichkeit der Modifikation der in Figur 2 dargestellten Beschaltung gezeigt, welche auf elegante Weise einen Zielkonflikt der Beschaltung löst. So ist es zum einen erwünscht, ein möglichst glattes elektrisches Signal über den Displayversorgungspfad 154 an den Displaytreiber 140 bereitzustellen, so dass das kapazitive Element 156 möglichst groß gewählt werden sollte. Zum anderen muss dieses kapazitive Element 156 jedoch, wie oben anhand von Figur 3 beschrieben, im Sicherheitsmodus schnell und zuverlässig entladen werden. Mit der beschriebenen, großen Kapazität von 154,7 Mikrofarad und einem Entladewiderstand 160 von beispielsweise 100 Ohm ergebe dies eine RC-Zeitkonstante von ca. 15 Millisekunden, was vergleichsweise lang ist. Daher ist in Figur 3 eine Modifikation der Beschaltung implementiert, welche das kapazitive Element 156 im Displayversorgungspfad 154 aufteilt, indem ein Schalter 188 eingesetzt wird. Dieser Schalter 188 ist über eine Schaltleitung 190 mit der Steuerleitung 170 (oder einem anderen Steuerausgang des Mikroprozessors 136) verbunden und kann daher über den Mikroprozessor 136 geschaltet werden, gleichzeitig mit dem Schalten, das heißt Schließen des Entladeschalters 162. Wird also ein Spannungsabfall im Signal der elektrischen Energieversorgung 130 erkannt, so wird, wie oben beschrieben, über den Komparator 172 ein Interrupt ausgelöst, und der Entladeschalter 162 wird geschlossen. Gleichzeitig oder lediglich geringfügig zeitversetzt wird jedoch auch der Schalter 188 geöffnet, so dass das erste kapazitive Element 155 von dem Displaytreiber 140 abgetrennt wird. Dies bewirkt jedoch, dass über die Entladeleitung 148 nunmehr lediglich noch die Ladung auf dem zweiten kapazitiven Element 157 über den Entladeschalter 162 entladen werden muss, also beispielsweise eine Kapazität von 4,7 Mikrofarad. Bei dem oben beschriebenen Entladewiderstand von beispielsweise 100 Ohm bedeutet dies eine Zeitkonstante für die Entladung des nunmehr lediglich noch wirksamen kapazitiven Elements 157 (das heißt dem Teil des kapazitiven Elements 156, welches noch im Displayversorgungspfad 154 vor dem Displaytreiber 140 zur Verfügung steht) von ca. 0,5 Millisekunden, so dass die elektrische Energieversorgung im Displayversorgungspfad 154 erheblich schneller zusammenbricht und ungeregelte Spannungszustände und/oder Stromzustände in der Versorgung des Displays 124 effektiv vermieden werden können.

Die Treiberkapazität 146, welche im Treiberversorgungspfad 144 integriert ist, kann im vorliegenden Ausführungsbeispiel beispielsweise einen Wert von 150 Mikrofarad annehmen. Es sei darauf hingewiesen, dass wiederum diese Treiberkapazität 146 sich aus verschiedenen Kapazitäten zusammensetzen kann, dass andere Größen der Kapazitäten verwendet werden können und dass die Beschaltung allgemein auch von der in Figur 3 dargestellten Beschaltung abweichen kann. Als weitere Modifikation, welche auch mit anderen Ausführungsbeispielen der erfindungsgemäßen Anzeigeeinrichtung 122 realisiert werden könnte, ist im Treiberversorgungspfad 144 zwischen dem ersten DC/DC-Konverter 132 und der Treiberkapazität 146 eine Diode 192 integriert. Diese Diode 192 verhindert, dass bei einem Zusammenbrechen der Energie der elektrischen Energieversorgung 130, welche über den Treiberversorgungspfad 144 bereitgestellt wird, sich die Treiberkapazität 146 über den sich in Figur 3 oberhalb der Diode 192 anschließenden Treiberversorgungspfad 144 entladen kann, beispielsweise über den ersten DC/DC-Konverter 132 und/oder andere hier angeordnete, nicht dargestellte Komponenten des medizinischen Hilfsmittels 110. Neben der Dimensionierung der beim Abschalten effektiv wirksamen Kapazitäten (das heißt beispielsweise der Relation zwischen der Treiberkapazität 146 und dem zweiten kapazitiven Element 157) trägt auch diese Schutzmaßnahme dazu bei, dass bei einem abrupten Absinken der elektrischen Energie die Funktionalität des Displaytreibers 140 bis zum Schluss aufrechterhalten bleibt, so dass bis zum vollständigen Abschalten keine ungeregelten Spannungs- und/oder Stromzustände am Display 124 auftreten können.

### Bezugszeichenliste

- 110: Medizinisches Hilfsmittel
- 112: Analytisches Testelement
- 114: Flüssige Probe
- 116: Steuerung
- 118: Microcomputer
- 120: Bedienelemente
- 122: Anzeigeeinrichtung
- 124: Display
- 126: Ansteuervorrichtung
- 128: Datenverbindung
- 130: Elektrische Energieversorgung
- 132: Erster DC/DC-Konverter
- 134: Ausgänge
- 136: Mikroprozessor
- 138: Steuerleitung
- 140: Displaytreiber
- 142: Bildleitungen
- 144: Treiberversorgungspfad
- 146: Treiberkapazität
- 148: Masse
- 150: Zweiter DC/DC-Konverter
- 152: Steuerleitung
- 154: Displayversorgungspfad
- 155: Erstes kapazitives Element
- 156: Kapazitives Element
- 157: Zweites kapazitives Element
- 158: Entladeleitung
- 160: Entladewiderstand
- 162: Entladeschalter
- 164: Drain
- 166: Source
- 168: Gate
- 170: Steuerleitung
- 172: Komparator

- 174: Vergleichseingang
- 176: Referenzeingang
- 178: Referenzspannungsquelle
- 180: Referenzspannung
- 182: Signalausgang
- 184: Interrupt-Eingang
- 186: Schutzschaltung
- 18: Schalter
- 190: Schaltleitung
- 192: Diode

## Patentansprüche

1. Medizinisches Hilfsmittel (110) zur Durchführung mindestens einer medizinischen Funktion, wobei das medizinische Hilfsmittel (110) eine elektrische Energieversorgung (130) und eine Anzeigeeinrichtung (122) zur optischen Darstellung einer Information umfasst, wobei die Anzeigeeinrichtung (122) ein Display (124) mit mindestens einem organischen lichtemittierenden Material umfasst, wobei die Anzeigeeinrichtung (122) eingerichtet ist, um mittels der elektrischen Energieversorgung (130) mit elektrischer Energie versorgt zu werden, wobei die Anzeigeeinrichtung (122) weiterhin eine Ansteuervorrichtung (126) zur Ansteuerung des Displays (124) umfasst, wobei die Ansteuervorrichtung (126) einen Displaytreiber (140) umfasst, wobei die Ansteuervorrichtung (126) eingerichtet ist, um das Display (124) in einem regulären Betriebsmodus zur Darstellung der Information anzusteuern, **dadurch gekennzeichnet, dass** die Ansteuervorrichtung (126) eine Schutzschaltung (186) umfasst, wobei die Schutzschaltung (186) eingerichtet ist, um ein von der elektrischen Energieversorgung (130) bereitgestelltes elektrisches Signal zu überwachen und um bei einer Abweichung des elektrischen Signals von einem Normbereich die Anzeigeeinrichtung (122) in einen Sicherheitszustand zu schalten.

2. Medizinisches Hilfsmittel (110) nach dem vorhergehenden Anspruch, wobei die elektrische Energieversorgung (130) einen auswechselbaren Energiespeicher umfasst, insbesondere einen auswechselbaren Akkumulator und/oder eine auswechselbare Batterie.

3. Medizinisches Hilfsmittel (110) nach einem der vorhergehenden Ansprüche, wobei das von der elektrischen Energieversorgung (130) bereitgestellte elektrische Signal eine von der elektrischen Energieversorgung (130) bereitgestellte Versorgungsspannung umfasst.

4. Medizinisches Hilfsmittel (110) nach dem vorhergehenden Anspruch, wobei die Versorgungsspannung der elektrischen Energieversorgung (130) unmittelbar erfasst wird.

5. Medizinisches Hilfsmittel (110) nach einem der beiden vorhergehenden Ansprüche, wobei das von der elektrischen Energieversorgung (130) bereitgestellte elektrische Signal **dadurch** erzeugt wird, dass die Versorgungsspannung durch einen Spannungskonverter (132) konvertiert wird.

6. Medizinisches Hilfsmittel (110) nach dem vorhergehenden Anspruch, wobei das von der elektrischen Energieversorgung (130) bereitgestellte elektrische Signal eine Versorgungsspannung eines Mikroprozessors (136) ist.

7. Medizinisches Hilfsmittel (110) nach einem der vorhergehenden Ansprüche, wobei die Schutzschaltung (186) derart eingerichtet ist, dass der Sicherheitszustand bei einem abrupten Abfall der von der elektrischen Energieversorgung (130) bereitgestellten elektrischen Energie gewährleistet, dass ein Betrieb des Displaytreibers (140) mindestens so lange aufrechterhalten wird wie das Display (124) mit elektrischer Energie versorgt wird.

8. Medizinisches Hilfsmittel (110) nach einem der vorhergehenden Ansprüche, wobei das Display (124) ein passiv-Matrix-Display umfasst.

9. Medizinisches Hilfsmittel (110) nach einem der vorhergehenden Ansprüche, wobei der Sicherheitszustand ein definiertes Abschalten einer Treiberspannung und/oder eines Treiberstroms des Displays (124) umfasst.

10. Medizinisches Hilfsmittel (110) nach einem der vorhergehenden Ansprüche, wobei in dem Sicherheitszustand mindestens ein kapazitives Element (156) definiert entladen wird, wobei die Schutzschaltung (186) mindestens einen Entladeschalter (162) umfasst, wobei der Entladeschalter (162) für das definierte Entladen des mindestens einen kapazitiven Elementes (156) geschaltet werden kann.

11. Medizinisches Hilfsmittel (110) nach dem vorhergehenden Anspruch, wobei das mindestens eine kapazitive Element (156) zwischen die elektrische Energieversorgung (130) und den Displaytreiber (140) geschaltet ist.

12. Medizinisches Hilfsmittel (110) nach einem der beiden vorhergehenden Ansprüche, wobei das kapazitive Element (156) mindestens zwei einzelne kapazitive Elemente (155, 157) umfasst.

13. Medizinisches Hilfsmittel (110) nach einem der drei vorhergehenden Ansprüche, wobei der Entladeschalter (162) durch einen Mikroprozessor (136) angesteuert wird.

14. Medizinisches Hilfsmittel (110) nach einem der vorhergehenden Ansprüche, wobei die elektrische Energieversorgung (130) über einen Displayversorgungspfad (154) eine elektrische Energie zum Betreiben des Displays (124) bereitstellt, wobei ein kapazitives Element (156) in den Displayversorgungspfad (154) integriert ist, wobei die elektrische Energieversorgung (130) weiterhin über einen Treiberversorgungspfad (144) eine elektrische Energie zum Betreiben des Displaytreibers (140) bereitstellt, wobei in den Treiberversorgungspfad (144) eine Treiberkapazität (146) integriert ist, wobei das kapazitive Element (156), die Treiberkapazität (146) und der Entladeschalter (162) derart dimensioniert sind, dass bei einer Unterbrechung der elektrischen Energieversorgung (130) das kapazitive Element (156) schneller entladen wird als die Treiberkapazität (146).

15. Medizinisches Hilfsmittel (110) nach dem vorhergehenden Anspruch, wobei der Treiberversorgungspfad (144) einen ersten DC/DC-Konverter (132) umfasst.

16. Medizinisches Hilfsmittel (110) nach einem der beiden vorhergehenden Ansprüche, wobei der Displayversorgungspfad (154) einen zweiten DC/DC-Konverter (150) umfasst.

17. Medizinisches Hilfsmittel (110) nach dem vorhergehenden Anspruch, wobei der Sicherheitszustand ein Abschalten des zweiten DC/DC-Konverters (150) umfasst.

18. Medizinisches Hilfsmittel (110) nach einem der vier vorhergehenden Ansprüche, wobei in dem Treiberversorgungspfad (144) weiterhin eine Diode (192) angeordnet ist, welche beim Abschalten der elektrischen Energieversorgung (130) ein Entladen der Treiberkapazität (146) in eine andere Richtung als über den Displaytreiber (140) zumindest weitgehend verhindert.

19. Medizinisches Hilfsmittel (110) nach einem der vorhergehenden Ansprüche, wobei die elektrische Energieversorgung (130) über einen Displayversorgungspfad (154) eine elektrische Energie zum Betreiben des Displays (124) bereitstellt, wobei weiterhin ein Schalter (188) in den Displayversorgungspfad (154) integriert ist, wobei der Sicherheitszustand eine Unterbrechung des Displayversorgungspfades (154) durch ein Öffnen des Schalters (188) beinhaltet.

20. Medizinisches Hilfsmittel (110) nach dem vorhergehenden Anspruch, wobei ein kapazitives Element (156) mit mindestens zwei einzelnen kapazitiven Elementen (155, 157) in den Displayversorgungspfad (154) integriert ist, wobei die beiden einzelnen kapazitiven Elemente (155, 157) durch den Schalter (188) getrennt sind.

21. Medizinisches Hilfsmittel (110) nach dem vorhergehenden Anspruch, wobei ein zwischen der elektrischen Energieversorgung (130) und dem Schalter (188) angeordnetes erstes kapazitives Element (155) größer ist als ein zwischen dem Schalter (188) und dem Displaytreiber (140) angeordnetes zweites kapazitives Element (157).

22. Medizinisches Hilfsmittel (110) nach einem der vorhergehenden Ansprüche, wobei die Schutzschaltung (186) einen Komparator (172) umfasst, wobei die Überwachung des von der elektrischen Energieversorgung (130) bereitgestellten elektrischen Signals einen Vergleich des elektrischen Signals mit einem Sollwert umfasst.

23. Medizinisches Hilfsmittel (110) nach dem vorhergehenden Anspruch, wobei der Komparator (172) zumindest teilweise in einen Mikroprozessor integriert ist.

24. Medizinisches Hilfsmittel (110) nach einem der beiden vorhergehenden Ansprüche, wobei die Schutzschaltung (186) eingerichtet ist, um ein Unterschreiten des Sollwertes durch das elektrische Signal als Abweichung von dem Normbereich zu erkennen.

25. Medizinisches Hilfsmittel (110) nach einem der drei vorhergehenden Ansprüche, wobei der Sollwert durch eine an dem Komparator (172) anliegende Referenzspannung (180) charakterisiert ist.

26. Medizinisches Hilfsmittel (110) nach dem vorhergehenden Anspruch, wobei die Referenzspannung (180) zumindest teilweise von einem Mikroprozessor (136) bereitgestellt wird.

27. Medizinisches Hilfsmittel (110) nach einem der vorhergehenden Ansprüche, wobei die Schutzschaltung (186) ein Datenverarbeitungsgerät, insbesondere einen Mikroprozessor (136), umfasst, welches eingerichtet ist, um ein Ansteuerprogramm zur Ansteuerung des Displays (124) durchzuführen.

28. Medizinisches Hilfsmittel (110) nach dem vorhergehenden Anspruch, wobei das Datenverarbeitungsgerät eingerichtet ist, um in dem Sicherheitszustand das Ansteuerprogramm zu unterbrechen und ein Abschaltprogramm durchzuführen.

29. Medizinisches Hilfsmittel (110) nach einem der beiden vorhergehenden Ansprüche, wobei das Datenverarbeitungsgerät eingerichtet ist, um den Displaytreiber (140) anzusteuern.

30. Verfahren zur Ansteuerung einer Anzeigeeinrichtung (122) zur optischen Darstellung einer Information, wobei die Anzeigeeinrichtung (122) ein Display (124) mit mindestens einem organischen lichtemittierenden Material umfasst, wobei die Anzeigeeinrichtung (122) mittels einer elektrischen Energieversorgung (130) mit elektrischer Energie versorgt wird, wobei die Anzeigeeinrichtung (122) weiterhin eine Ansteuervorrichtung (126) zur Ansteuerung des Displays (124) und einen Displaytreiber (140) umfasst, wobei das Display (124) in einem regulären Betriebsmodus zur Darstellung der Information angesteuert wird, **dadurch gekennzeichnet, dass** ein von der elektrischen Energieversorgung (130) bereitgestelltes elektrisches Signal überwacht wird und bei einer Abweichung des elektrischen Signals von einem Normbereich die Anzeigeeinrichtung (122) in einen Sicherheitszustand geschaltet wird.
